# EUROPÄISCHE PATENTANMELDUNG

(11) **EP 4 464 645 A1**
(43) Veröffentlichungstag der Anmeldung: **20.11.2024**
(21) Anmeldenummer: 24173831.9
(22) Anmeldetag: 02.05.2024
(51) Int. Cl.: B66F 9/075, G06V 20/58, G01S 17/931

(54) **FLURFÖRDERZEUG MIT EINER UMGEBUNGSSENSOREINRICHTUNG**

(30) Priorität: 16.05.2023 DE 102023112924
(71) Anmelder: Linde Material Handling GmbH, 63743 Aschaffenburg (DE)
(72) Erfinder: Schuck, Johannes, 63840 Hausen (DE); Hanke, Mark, 63739 Achaffenburg (DE); Pfeffermann, Matthias, 63739 Aschaffenburg (DE); Steigerwald, Jens, 63877 Sailauf-Eichenberg (DE)
(74) Vertreter: Patentship Patentanwaltgesellschaft

(57) **Zusammenfassung**

Die Erfindung betrifft ein Flurförderzeug (1) mit einer Umgebungssensoreinrichtung (10), die an einer Montagestelle (11) an dem Flurförderzeug (1) angebaut ist und einen auf einen Fahrboden (FB) ausgerichteten Sensorüberwachungsbereich (SB) aufweist, wobei die Umgebungssensoreinrichtung (10) ausgebildet ist, Objekte in dem Sensorüberwachungsbereich (SB) zu erfassen und Abstandsinformationen (AI) der erfassten Objekte zu ermitteln. Die Umgebungssensoreinrichtung (10) ist ausgebildet, in dem Sensorüberwachungsbereich (SB) erfasste Objekte als zu dem Flurförderzeug (1) gehörende Kontur (K) zu ermitteln. Die Umgebungssensoreinrichtung (10) ist ferner ausgebildet, die zu dem Flurförderzeug (1) gehörende Kontur (K) bei der Umgebungsüberwachung als irrelevant zu behandeln.

## Beschreibung

Die Erfindung betrifft ein Flurförderzeug mit einer Umgebungssensoreinrichtung, die an einer Montagestelle an dem Flurförderzeug angebaut ist und einen auf einen Fahrboden ausgerichteten Sensorüberwachungsbereich aufweist, wobei die Umgebungssensoreinrichtung ausgebildet ist, Objekte in dem Sensorüberwachungsbereich zu erfassen und Abstandsinformationen der erfassten Objekte zu ermitteln.

Die Erfindung betrifft weiterhin ein Verfahren zum Ermitteln der in einem Sensorüberwachungsbereich einer an einem Flurförderzeug angebauten Umgebungssensoreinrichtung liegenden Kontur des Flurförderzeugs, wobei der Umgebungssensoreinrichtung an einer Montagestelle an dem Flurförderzeug angebaut ist und einen auf den Fahrboden ausgerichteten Sensorüberwachungsbereich aufweist, wobei von der Umgebungssensoreinrichtung Objekte in dem Sensorüberwachungsbereich erfasst werden und Abstandsinformationen der erfassten Objekte ermittelt werden.

Bei Flurförderzeugen ist es bekannt, eine Umgebungssensoreinrichtung an dem Flurförderzeug anzubauen, mit der ein auf den Fahrboden ausgerichteten Sensorüberwachungsbereich auf Objekte überwacht wird. Die Umgebungssensoreinrichtung ermittelt bei einem in dem Sensorüberwachungsbereich erfassten Objekt Abstandsinformationen des erfassten Objekts, beispielsweise einen Abstandswert des erfassten Objekts.

Derartige Umgebungssensoreinrichtungen können an automatisierten oder autonomen Flurförderzeugen angebaut sein, um eine Hindernisserkennung durchzuführen und bei einem in dem Sensorüberwachungsbereich ermittelten Objekt eine Fahrzeugreaktion des Flurförderzeugs auszulösen, beispielsweise das Flurförderzeug abzubremsen, um eine Kollision mit dem Objekt zu verhindern.

Derartige Umgebungssensoreinrichtungen können ebenfalls an manuell, von einem Fahrer bedienten Flurförderzeugen angebaut sein, um Assistenzsysteme zu bilden, beispielsweise eine Heckraumüberwachung und/oder eine Losfahrverhinderung, die bei einem im Heckraum als Sensorüberwachungsbereich erfassten Objekt, beispielsweise einer Person, eine Fahrzeugreaktion auslöst, beispielsweise ein Warnsignal ausgibt und/oder das Losfahren des Flurförderzeugs in den Sensorüberwachungsbereich hinein verhindert.

Bei derartigen Flurförderzeugen kann es je nach Anbaupositionen der Umgebungssensoreinrichtung an dem Flurförderzeug und Ausrichtung des Sensorüberwachungsbereichs vorkommen, dass Teile des Flurförderzeugs in dem Sensorüberwachungsbereich liegen und von der Umgebungssensoreinrichtung als Objekte und störende Hindernisse erkannt werden, die eine entsprechende Fahrzeugreaktion auslösen, beispielsweise ein Abbremsen des Flurförderzeugs auslösen und/oder ein Warnsignal auslösen und/oder eine Losfahren des Flurförderzeugs in den Sensorüberwachungsbereich hinein verhindern.

Um dies zu verhindern, muss nach dem Anbau der Umgebungssensoreinrichtung an dem Flurförderzeug der Umgebungssensoreinrichtung eingelernt werden, welche Objekte in dem Sensorüberwachungsbereich zum Flurförderzeug gehören, um nicht fälschlicherweise auf diese zum Flurförderzeug gehörende Objekte mit einer entsprechenden Fahrzeugreaktion zu reagieren.

Hierzu ist es bekannt, manuell die innerhalb des Sensorüberwachungsbereichs liegende Kontur des Flurförderzeugs an der Umgebungssensoreinrichtung oder in einem Service-Tool der Umgebungssensoreinrichtung einzugeben, beispielsweise indem die Fahrzeugabmessungen des Flurförderzeugs als Koordinaten eingegeben werden oder die Kontur des Flurförderzeugs graphisch eingegeben wird oder Quader gesetzt werden, um die Kontur des Flurförderzeugs aus dem Sensorüberwachungsbereich heraus zu nehmen.

Eine derartige manuelle Eingabe der Kontur des Flurförderzeugs ist jedoch äußert zeitaufwändig. Sofern Änderungen an der Fahrzeugkontur auftreten, muss die neue Fahrzeugkontur erneut aufwändig manuell angepasst und eingegeben werden.

Der vorliegenden Erfindung liegt die Aufgabe zugrunde, ein Flurförderzeug und ein Verfahren zum Ermitteln der in einem Sensorüberwachungsbereich einer an einem Flurförderzeug angebauten Umgebungssensoreinrichtung liegenden Kontur des Flurförderzeugs zur Verfügung zu stellen, das hinsichtlich der genannten Nachteile verbessert ist.

Diese Aufgabe wird erfindungsgemäß dadurch gelöst, dass die Umgebungssensoreinrichtung ausgebildet ist, in dem Sensorüberwachungsbereich erfasste Objekte als zu dem Flurförderzeug gehörende Kontur zu ermitteln, und die Umgebungssensoreinrichtung ferner ausgebildet ist, die zu dem Flurförderzeug gehörende Kontur bei der Umgebungsüberwachung als irrelevant zu behandeln.

Die Umgebungssensoreinrichtung ist erfindungsgemäß derart ausgebildet, dass die Umgebungssensoreinrichtung selbstständig in dem Sensorüberwachungsbereich erfasste Objekte als zu dem Flurförderzeug gehörende Kontur ermitteln kann und somit die in dem Sensorüberwachungsbereich liegende Kontur des Flurförderzeugs feststellen kann. Erfindungsgemäß wird somit von der Umgebungssensoreinrichtung selbst die in dem Sensorüberwachungsbereich befindliche Kontur des Flurförderzeugs ermittelt und eingelernt und die ermittelte Kontur des Flurförderzeugs bei der späteren Umgebungsüberwachung durch die Umgebungssensoreinrichtung als irrelevant behandelt. Dadurch kann in einfacher Weise erzielt werden, dass die Umgebungssensoreinrichtung nicht auf in dem Sensorüberwachungsbereich liegende Teile des Flurförderzeug mit einer Fahrzeugreaktion regiert.

Eine aufwändige manuelle Eingabe der Kontur des Flurförderzeugs ist somit nicht mehr erforderlich.

Gemäß einer vorteilhaften Ausgestaltungsform der Erfindung ist die Umgebungssensoreinrichtung ausgebildet, aus dem vertikalen Abstand der an der Montagestelle an dem Flurförderzeug angebauten Umgebungssensoreinrichtung zu dem Fahrboden und den Abstandsinformationen der erfassten Objekte diejenigen erfassten Objekte als zu dem Flurförderzeug gehörende Kontur zu erkennen, deren Abstandsinformation kleiner als der vertikale Abstand der an der Montagestelle an dem Flurförderzeug angebauten Umgebungssensoreinrichtung zu dem Fahrboden ist. Der vertikale Abstand der an der Montagestelle an dem Flurförderzeug angebauten Umgebungssensoreinrichtung zu dem Fahrboden kann hierbei bekannt sein, beispielsweise von einer Person ausgemessen werden und der Umgebungssensoreinrichtung zur Verfügung gestellt werden, oder von der Umgebungssensoreinrichtung selbst ermittelt werden, beispielsweise indem die Umgebungssensoreinrichtung die Bodenebene und somit die Ebene des Fahrbodens erkennt.

Für die Ermittlung der innerhalb des Sensorüberwachungsbereichs liegende Kontur des Flurförderzeugs ist der Umgebungssensoreinrichtung lediglich der vertikale Abstand der an der Montagestelle an dem Flurförderzeug angebauten Umgebungssensoreinrichtung zu dem Fahrboden bereitzustellen oder von der Umgebungssensoreinrichtung dieser vertikale Abstand zu ermitteln. Die Umgebungssensoreinrichtung kann dann selbstständig, beispielsweise mittels eines geeigneten Algorithmus, mit den Abstandsinformationen der erfassten Objekte diejenigen erfassten Objekte als zu dem Flurförderzeug gehörende Kontur ermitteln, deren Abstandsinformation kleiner als der bekannte zw. ermittelte vertikale Abstand der an der Montagestelle an dem Flurförderzeug angebauten Umgebungssensoreinrichtung zu dem Fahrboden ist. Die Abstandsinformation der erfassten Objekte ist bevorzugt ein Abstandswert bzw. ein Abstand, der mit dem bekannten bzw. ermittelten vertikalen Abstand der an der Montagestelle an dem Flurförderzeug angebauten Umgebungssensoreinrichtung zu dem Fahrboden verglichen werden kann. Das selbstständige Einlernen der innerhalb des Sensorüberwachungsbereichs liegenden Kontur des Flurförderzeugs durch die Umgebungssensoreinrichtung geschieht somit dadurch, dass die Anbauposition der Umgebungssensoreinrichtung und somit deren Abstand zum Fahrboden bekannt ist. Misst die Umgebungssensoreinrichtung Abstände von einzelnen erfassten Objekten, die kürzer sind als der Abstand der Umgebungssensoreinrichtung zum Fahrboden, können diese Objekte der Kontur des Flurförderzeugs zugeordnet werden.

Gemäß einer vorteilhaften Ausgestaltungsform der Erfindung ist die Abstandsinformation des erfassten Objekts als vertikaler Abstand des erfassten Objekts zu der an der Montagestelle angebauten Umgebungssensoreinrichtung ausgebildet. Der vertikale Abstand des erfassten Objekts kann von der Umgebungssensoreinrichtung direkt erfasst oder aus der Abstandsinformation des erfassten Objekts berechnet werden.

Gemäß einer vorteilhaften Ausgestaltungsform der Erfindung ist die Umgebungssensoreinrichtung ausgebildet ist, die ermittelte, zu dem Flurförderzeug gehörende Kontur abzuspeichern. Die in dem Sensorüberwachungsbereich befindliche Kontur des Flurförderzeugs kann somit nach dem Einlernen in einfacher Weise von der Umgebungssensoreinrichtung abgespeichert werden, so dass die Kontur bei der späteren Umgebungsüberwachung durch die Umgebungssensoreinrichtung als irrelevant behandelt werden kann.

Gemäß einer vorteilhaften Ausgestaltungsform der Erfindung ist die Umgebungssensoreinrichtung ausgebildet, die zu dem Flurförderzeug gehörende Kontur zu verschiedenen Zeitpunkten zu ermitteln und bei einer Veränderung der ermittelten Kontur ein Warnsignal auszugeben. Sofern eine zu einem späteren Zeitpunkt ermittelte Kontur des Flurförderzeugs von einer zuvor ermittelten und eingelernten Kontur des Flurförderzeugs abweicht, kann auf einfache Weise eine Dejustage oder eine Manipulation der Umgebungssensoreinrichtung automatisch erkannt werden und ein entsprechendes Warnsignal erzeugt werden.

Gemäß einer vorteilhaften Ausgestaltungsform der Erfindung ist die Umgebungssensoreinrichtung als Lasersensor, beispielsweise als 2D- oder 3D-Laserscanner oder als Lidar-Sensor, oder als Kamera, beispielsweise als Time-of-Flight-Kamera, ausgebildet ist.

Die Aufgabe wird bei einem Verfahren zum Ermitteln der in einem Sensorüberwachungsbereich einer an einem Flurförderzeug angebauten Umgebungssensoreinrichtung liegenden Kontur des Flurförderzeugs, wobei die Umgebungssensoreinrichtung an einer Montagestelle an dem Flurförderzeug angebaut ist und einen auf einen Fahrboden ausgerichteten Sensorüberwachungsbereich aufweist, wobei von der Umgebungssensoreinrichtung Objekte in dem Sensorüberwachungsbereich erfasst werden und Abstandsinformationen der erfassten Objekte ermittelt werden, erfindungsgemäß dadurch gelöst, dass in einem Einlernvorgang von der Umgebungssensoreinrichtung in dem Sensorüberwachungsbereich erfasste Objekte als zu dem Flurförderzeug gehörende Kontur ermittelt wird und die zu dem Flurförderzeug gehörende Kontur bei einer von der Umgebungssensoreinrichtung ausgeführten Umgebungsüberwachung als irrelevant behandelt wird.

In dem Einlernvorgang werden somit von der Umgebungssensoreinrichtung selbstständig in dem Sensorüberwachungsbereich erfasste Objekte als zu dem Flurförderzeug gehörende Kontur ermittelt und somit die in dem Sensorüberwachungsbereich liegende Kontur des Flurförderzeugs festgestellt und eingelernt. Erfindungsgemäß wird somit von der Umgebungssensoreinrichtung selbst die in dem Sensorüberwachungsbereich befindliche Kontur des Flurförderzeugs ermittelt und eingelernt und die ermittelte Kontur des Flurförderzeugs bei der späteren Umgebungsüberwachung durch die Umgebungssensoreinrichtung als irrelevant behandelt. Dadurch kann in einfacher Weise erzielt werden, dass die Umgebungssensoreinrichtung nicht auf in dem Sensorüberwachungsbereich liegende Teile des Flurförderzeug mit einer Fahrzeugreaktion reagiert.

Eine aufwändige manuelle Eingabe der Kontur des Flurförderzeugs ist somit nicht mehr erforderlich.

Gemäß einer vorteilhaften Ausgestaltungsform der Erfindung werden in dem Einlernvorgang mit den Abstandsinformationen der erfassten Objekte diejenigen erfassten Objekte als zu dem Flurförderzeug gehörende Kontur ermittelt, deren Abstandsinformation, insbesondere deren vertikaler Abstand zu der an der Montagestelle angebauten Umgebungssensoreinrichtung, kleiner als ein vertikaler Abstand der an der Montagestelle an dem Flurförderzeug angebauten Umgebungssensoreinrichtung zu dem Fahrboden ist.

Für das automatische Einlernen der innerhalb des Sensorüberwachungsbereichs liegenden Kontur des Flurförderzeugs ist der Umgebungssensoreinrichtung lediglich der vertikale Abstand der an der Montagestelle an dem Flurförderzeug angebauten Umgebungssensoreinrichtung zu dem Fahrboden bereitzustellen bzw. von der Umgebungssensoreinrichtung der vertikale Abstand der am der Montagestelle an dem Flurförderzeug angebauten Umgebungssensoreinrichtung zu dem Fahrboden zu ermitteln. Die Umgebungssensoreinrichtung kann dann selbstständig, beispielsweise mittels eines geeigneten Algorithmus, mit den Abstandsinformationen der erfassten Objekte diejenigen erfassten Objekte als zu dem Flurförderzeug gehörende Kontur ermitteln, deren Abstandsinformation kleiner als der bekannte bzw. ermittelte vertikale Abstand der an der Montagestelle an dem Flurförderzeug angebauten Umgebungssensoreinrichtung zu dem Fahrboden ist. Die Abstandsinformation der erfassten Objekte ist bevorzugt ein Abstandswerte bzw. ein Abstand, der mit dem bekannten bzw. ermittelten vertikalen Abstand der an der Montagestelle an dem Flurförderzeug angebauten Umgebungssensoreinrichtung zu dem Fahrboden verglichen werden kann. Das selbstständige Einlernen der innerhalb des Sensorüberwachungsbereichs liegenden Kontur des Flurförderzeugs durch die Umgebungssensoreinrichtung geschieht somit dadurch, dass die Anbauposition der Umgebungssensoreinrichtung und somit deren Abstand zum Fahrboden bekannt ist. Misst die Umgebungssensoreinrichtung Abstände von einzelnen erfassten Objekten, die kürzer sind als der Abstand der Umgebungssensoreinrichtung zum Fahrboden, können diese Objekte der Kontur des Flurförderzeugs zugeordnet werden.

Gemäß einer vorteilhaften Ausgestaltungsform der Erfindung wird die in dem Einlernvorgang ermittelte, zu dem Flurförderzeug gehörende Kontur in der Umgebungssensoreinrichtung abgespeichert. Die in dem Sensorüberwachungsbereich befindliche Kontur des Flurförderzeugs kann somit nach dem Einlernen in einfacher Weise von der Umgebungssensoreinrichtung abgespeichert werden, so dass die Kontur bei der späteren Umgebungsüberwachung durch die Umgebungssensoreinrichtung als irrelevant behandelt werden kann.

Gemäß einer vorteilhaften Ausgestaltungsform der Erfindung wird von der Umgebungssensoreinrichtung die zu dem Flurförderzeug gehörende Kontur zu verschiedenen Zeitpunkten ermittelt und bei einer Veränderung der ermittelten Kontur ein Warnsignal ausgegeben. Sofern eine zu einem späteren Zeitpunkt ermittelte Kontur des Flurförderzeugs von einer zuvor ermittelten und eingelernten Kontur des Flurförderzeugs abweicht, kann auf einfache Weise eine Dejustage oder eine Manipulation der Umgebungssensoreinrichtung automatisch erkannt werden und ein entsprechendes Warnsignal erzeugt werden.

Gemäß einer vorteilhaften Ausgestaltungsform der Erfindung wird der Einlernvorgang in einer Einlernumgebung durchgeführt. In der Einlernumgebung befinden sich bevorzugt innerhalb des Sensorüberwachungsbereichs keine weiteren Objekte auf dem Fahrboden. Hierdurch wird auf einfache Weise sichergestellt, dass die während des Einlernvorgangs von der Umgebungssensoreinrichtung in dem Sensorüberwachungsbereich erfassten Objekte ausschließlich zu dem Flurförderzeug gehören und dessen in dem Sensorüberwachungsbereich liegende Kontur betreffen, so dass in dem Einlernvorgang in einfacher und sicherer Weise die in dem Sensorüberwachungsbereich liegende Kontur des Flurförderzeugs ermittelt werden kann.

Der Einlernvorgang kann bei stehendem Flurförderzeug an einem Einlernplatz als Einlernumgebung durchgeführt werden. Alternativ kann der Einlernvorgang während der Fahrt des Flurförderzeugs durchgeführt werden, in dem sich verändernde Bereiche während des Einlernvorgangs der Umgebung zugeordnet werden. Da das Flurförderzeug während der Fahrt für die Umgebungssensoreinrichtung statisch unverändert ist, können somit in dem Einlernvorgang gleichbleibende erfasste Objekte als Kontur des Flurförderzeugs erkannt werden.

Die Erfindung weist eine Reihe von Vorteilen auf.

Die Erfindung ermöglicht es, die innerhalb des Sensorüberwachungsbereichs befindliche Kontur des Flurförderzeugs automatisch mit der Umgebungssensoreinrichtung zu ermitteln und einzulernen.

Ist diese Kontur des Flurförderzeugs einmal eingelernt, so kann die Umgebungssensoreinrichtung die zum Flurförderzeug gehörende Kontur für eine Umgebungsüberwachung als irrelevant behandeln.

Darüber hinaus kann durch die eingelernte Kontur des Flurförderzeugs eine Manipulationen oder Dejustage der Umgebungssensoreinrichtung automatisch ermittelt werden, indem von der Umgebungssensoreinrichtung überprüft wird, ob eine früher eingelernte Kontur des Flurförderzeugs noch mit einer aktuell eingelernten Kontur des Flurförderzeugs übereinstimmt.

Darüber hinaus können Änderungen am Flurförderzeug, beispielsweise Um- und/oder Anbauten, die zu einer Veränderung der Kontur des Flurförderzeugs führen, in einfacher Weise beim Kunden im Feld durch einen Servicetechniker und Starten eines entsprechenden Einlernvorgangs eingelernt werden. Es ist keine komplizierte und aufwändige manuelle Eingabe von Fahrzeugabmessungen in Koordinaten oder ähnliches nötig.

Der Einlernvorgang der in dem Sensorüberwachungsbereich liegenden Kontur des Flurförderzeugs durch die Umgebungssensoreinrichtung kann in einfacher Weise, beispielsweise durch einen Servicetechniker, in einem Service-Tool der Umgebungssensoreinrichtung gestartet werden, beispielsweise durch Betätigen eines den Einlernvorgang startenden Betätigungselements.

Weitere Vorteile und Einzelheiten der Erfindung werden anhand des in der schematischen Figur dargestellten Ausführungsbeispiels näher erläutert.

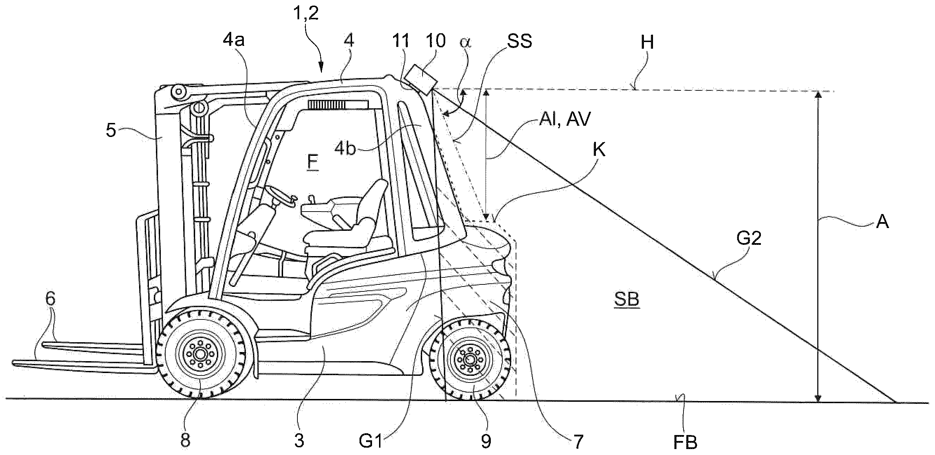

In der Figur ist eine Seitenansicht eines erfindungsgemäßen Flurförderzeugs 1 dargestellt.

Das Flurförderzeug 1 ist im dargestellten Ausführungsbeispiel als Gegengewichtsgabelstapler 2 ausgebildet.

Das Flurförderzeug 1 weist einen Fahrzeugkörper 3 mit einem Fahrerschutzdach 4 auf, das mittels vorderer Fahrerschutzdachstreben 4a und hinterer Fahrerschutzdachstreben 4b auf dem Fahrzeugkörper 3 aufgesetzt ist. Innerhalb des Fahrerschutzdaches 4 ist eine Fahrerarbeitsplatz F für einen Fahrer ausgebildet.

An der Vorderseite des Flurförderzeugs 1 ist ein Hubmast 5 mit einem anhebbaren und absenkbaren Lastaufnahmemittel 6 angeordnet.

An der Heckseite des Flurförderzeugs 1 ist der Fahrzeugkörper 1 von einem Gegengewicht 7 gebildet.

Das Flurförderzeug 1 stützt sich mittels Vorderrädern 8, die bevorzugt als Antriebsräder ausgebildet sind, und lenkbaren Hinterrädern 9 auf einem Fahrboden FB ab.

Das Flurförderzeug 1 weist eine Umgebungssensoreinrichtung 10 auf, die an einer Montagestelle 11 an dem Flurförderzeug 1 angebaut ist und einen auf den Fahrboden FB ausgerichteten Sensorüberwachungsbereich SB aufweist.

Im dargestellten Ausführungsbeispiel befindet sich die Montagestelle 11 an dem vertikal oberen, heckseitige Bereich des Fahrerschutzdaches 4, wodurch die Umgebungssensoreinrichtung 10 an dem vertikal oberen, heckseitige Bereich des Fahrerschutzdaches 4 angeordnet ist. Die Umgebungssensoreinrichtung 10 ist mit dem Sensorüberwachungsbereich SB nach hinten und schräg nach unten auf den Fahrboden FB hin orientiert. Der Überwachungsbereich SB der Umgebungssensoreinrichtung 10 ist in der Figur mit den Sichtbereichsgrenzen G1, G2 der Umgebungssensoreinrichtung 10 veranschaulicht.

Die Umgebungssensoreinrichtung 10 ist ausgebildet, Objekte in dem Sensorüberwachungsbereich SB zu erfassen und Abstandsinformationen der erfassten Objekte zu ermitteln.

Wird von der Umgebungssensoreinrichtung 10 ein Objekt in dem Sensorüberwachungsbereich SB erfasst, kann eine Fahrzeugreaktion ausgelöst werden, beispielsweise ein Abbremsen des fahrenden Flurförderzeugs 1 durchgeführt werden und/oder eine Ausgabe eines Warnsignal durchgeführt werden und/oder ein Losfahren des stehenden Flurförderzeugs 1 in den Sensorüberwachungsbereich SB hinein verhindert werden.

Wie aus der Figur ersichtlich ist, befinden sich Teile des Flurförderzeugs 1, im dargestellten Ausführungsbeispiel Teile der hinteren Fahrerschutzdachstreben 4b und des Gegengewichts 7 des Flurförderzeugs 1 im Sichtbereich SB der Umgebungssensoreinrichtung 10.

Um zu verhindern, dass diese Teile des Flurförderzeugs 1 von der Umgebungssensoreinrichtung 10 als störendes Objekt erfasst werden, die eine entsprechende Fahrzeugreaktion auslösen, wird von der Umgebungssensoreinrichtung 10 in einem Einlernvorgang in einer Einlernumgebung, wobei sich innerhalb des Sensorüberwachungsbereichs SB keine weiteren Objekte auf dem Fahrboden FB befinden, die innerhalb des Sensorüberwachungsbereichs SB befindliche Kontur K des Flurförderzeugs 1 ermittelt und eingelernt. Hierzu werden von der Umgebungssensoreinrichtung 10 in dem Sensorüberwachungsbereich SB erfasste Objekte als zu dem Flurförderzeug 1 gehörende Kontur K ermittelt. Da sich in der Einlernumgebung außer dem Flurförderzeug 1 keine weiteren Objekte in dem Sensorüberwachungsbereich SB befinden, können somit während des Einlernvorgangs alle von der Überwachungssensoreinrichtung 10 ermittelten Objekte in dem Sensorüberwachungsbereich SB der Kontur K des Flurförderzeug 1 zugeordnet werden und als zu dem Flurförderzeug 1 gehörende Kontur K ermittelt werden.

Die in dem Sensorüberwachungsbereich SB befindliche und in dem Einlernvorgang ermittelte Kontur K des Flurförderzeugs 1 ist in der Figur mit der gepunkteten Linie dargestellt, die sich ausgehend von der hinteren Fahrerschutzdachstrebe 4b über die Oberseite des Gegengewichts 7 zum Fahrzeugheck erstreckt.

Die in dem Einlernvorgang ermittelte, innerhalb des Sensorüberwachungsbereichs SB befindliche Kontur K des Flurförderzeugs 1 wird von der Überwachungssensoreinrichtung 10 abgespeichert bei einer von der Umgebungssensoreinrichtung 10 ausgeführten Umgebungsüberwachung als irrelevant behandelt. In einer an den Einlernvorgang anschließenden Betriebsphase des Flurförderzeugs 1 wird somit bei der Umgebungsüberwachung von der Umgebungssensoreinrichtung 10 die innerhalb des Sensorüberwachungsbereichs SB befindliche Kontur K des Flurförderzeugs 1 und der unterhalb der Kontur K liegende Bereich des Flurförderzeugs 1, der in der Figur schraffiert dargestellt ist, als zu dem Flurförderzeug 1 gehörend erkannt und bei der Umgebungsüberwachung als irrelevant behandelt, so dass die Kontur K nicht als störendes Objekt erkannt wird und von der Kontur K keine Fahrzeugreaktion ausgelöst wird.

Für die Ermittlung der in dem Sensorüberwachungsbereich SB befindliche Kontur K des Flurförderzeugs 1 ist die Umgebungssensoreinrichtung 10 ausgebildet, aus dem vertikalen Abstand A der an der Montagestelle 11 an dem Flurförderzeug 1 angebauten Umgebungssensoreinrichtung 10 zu dem Fahrboden FB und den Abstandsinformationen AI der erfassten Objekte diejenigen erfassten Objekte als zu dem Flurförderzeug 1 gehörende Kontur K zu ermitteln, deren Abstandsinformation AI kleiner, d.h. kürzer, als der vertikale Abstand A der an der Montagestelle 11 an dem Flurförderzeug 1 angebauten Umgebungssensoreinrichtung 10 zu dem Fahrboden FB ist.

Der vertikale Abstand A der an der Montagestelle 11 an dem Flurförderzeug 1 angebauten Umgebungssensoreinrichtung 10 zu dem Fahrboden FB kann hierzu beispielsweise von einem Servicetechniker ausgemessen werden und der Umgebungssensoreinrichtung 10 zur Verfügung gestellt werden.

Alternativ kann der vertikale Abstand A der an der Montagestelle 11 an dem Flurförderzeug 1 angebauten Umgebungssensoreinrichtung 10 zu dem Fahrboden FB von der Umgebungssensoreinrichtung 10 selbst ermittelt werden, beispielsweise indem die Umgebungssensoreinrichtung 10 die Bodenebene und somit die Ebene des Fahrbodens FB erkennt.

Die Abstandsinformation AI des erfassten Objekts ist bevorzugt als vertikaler Abstand AV des erfassten Objekts zu der an der Montagestelle 11 angebauten Umgebungssensoreinrichtung 10 ausgebildet.

In der Figur ist beispielsweise ein Sensorstrahl SS verdeutlicht, der in dem Einlernvorgang auf das Gegengewicht 7 trifft und dieses als Objekt erfasst. Die Umgebungssensoreinrichtung 10 kann beispielsweise über eine Laufzeitmessung die Länge des Sensorstrahls SS ermitteln und mit dem in der Umgebungssensoreinrichtung 10 bekannten Abstrahlwinkel α des Sensorstrahls SS gegenüber einer zu dem Fahrboden FB parallel angeordneten Horizontalebene H den vertikaler Abstand AV des erfassten Objekts zu der an der Montagestelle 11 angebauten Umgebungssensoreinrichtung 10 berechnen. In der Umgebungssensoreinrichtung 10 wird dann der Wert des vertikaler Abstands AV des erfassten Objekts mit dem hinterlegten bzw. ermittelten vertikalen Abstand A der an der Montagestelle 11 an dem Flurförderzeug 1 angebauten Umgebungssensoreinrichtung 10 zu dem Fahrboden FB verglichen und das von dem Sensorstrahl SS erfasste Objekt als zu dem Flurförderzeug 1 gehörende Kontur K ermittelt, wenn der vertikale Abstands AV des erfassten Objekts kleiner als der bekannte bzw. ermittelte vertikale Abstand A der Umgebungssensoreinrichtung 10 zu dem Fahrboden FB ist.

In einer Weiterbildung der Erfindung kann von der Umgebungssensoreinrichtung 10 die zu dem Flurförderzeug 1 gehörende, in dem Sensorüberwachungsbereich SB befindliche Kontur K zu verschiedenen Zeitpunkten ermittelt werden und bei einer Veränderung der ermittelten Kontur K ein Warnsignal ausgegeben werden. Tritt beispielsweise bei einer zu einem späteren Zeitpunkt in einem Einlernvorgang erfassten Kontur K des Flurförderzeugs 1 eine Veränderung gegenüber einer zu einem früheren Zeitpunkt in einem Einlernvorgang erfassten Kontur K des Flurförderzeugs 1 auf, kann von der Umgebungssensoreinrichtung 10 automatisch eine Dejustage oder eine Manipulation der Umgebungssensoreinrichtung 10 erkannt werden und ein entsprechendes Warnsignal erzeugt werden.

Die Erfindung ist nicht auf das in der Figur dargestellte Ausführungsbeispiel beschränkt.

Das Flurförderzeug 1 kann alternativ zu einem Gegengewichtsgabelstapler 2 beispielsweise als Schubmaststapler oder Lagertechnikflurförderzeug ausgebildet sein,

Weiterhin ist die Erfindung nicht auf die dargestellte Anordnung der Umgebungssensoreinrichtung 10 mit dem nach hinten orientierten Sensorüberwachungsbereich SB beschränkt.

Alternativ kann die Umgebungssensoreinrichtung 10 mit einem nach vorne und/oder zur linken Fahrzeugseite und/oder zur rechten Fahrzeugseite orientierten Sensorüberwachungsbereich SB am Flurförderzeug 1 angebaut sein.

Darüber hinaus könnten an jeder Seite des Flurförderzeugs 1 auch mehrere Umgebungssensoreinrichtung 10 für eine 360° - Überwachung angebracht sein, die bevorzugt fusioniert werden.

## Patentansprüche

1. Flurförderzeug (1) mit einer Umgebungssensoreinrichtung (10), die an einer Montagestelle (11) an dem Flurförderzeug (1) angebaut ist und einen auf einen Fahrboden (FB) ausgerichteten Sensorüberwachungsbereich (SB) aufweist, wobei die Umgebungssensoreinrichtung (10) ausgebildet ist, Objekte in dem Sensorüberwachungsbereich (SB) zu erfassen und Abstandsinformationen (AI) der erfassten Objekte zu ermitteln, **dadurch gekennzeichnet, dass** die Umgebungssensoreinrichtung (10) ausgebildet ist, in dem Sensorüberwachungsbereich (SB) erfasste Objekte als zu dem Flurförderzeug (1) gehörende Kontur (K) zu ermitteln, und die Umgebungssensoreinrichtung (10) ferner ausgebildet ist, die zu dem Flurförderzeug (1) gehörende Kontur (K) bei der Umgebungsüberwachung als irrelevant zu behandeln.

2. Flurförderzeug nach Anspruch 1, **dadurch gekennzeichnet, dass** die Umgebungssensoreinrichtung (10) ausgebildet ist, aus dem vertikalen Abstand (A) der an der Montagestelle (11) an dem Flurförderzeug (1) angebauten Umgebungssensoreinrichtung (10) zu dem Fahrboden (FB) und den Abstandsinformationen (AI) der erfassten Objekte diejenigen erfassten Objekte als zu dem Flurförderzeug (1) gehörende Kontur (K) zu ermitteln, deren Abstandsinformation (AI) kleiner als der vertikale Abstand (A) der an der Montagestelle (11) an dem Flurförderzeug (1) angebauten Umgebungssensoreinrichtung (10) zu dem Fahrboden (FB) ist.

3. Flurförderzeug nach Anspruch 1 oder 2, **dadurch gekennzeichnet, dass** die Abstandsinformation (AI) des erfassten Objekts als vertikaler Abstand (AV) des erfassten Objekts zu der an der Montagestelle (11) angebauten Umgebungssensoreinrichtung (10) ausgebildet ist.

4. Flurförderzeug nach einem der Ansprüche 1 bis 3, **dadurch gekennzeichnet, dass** die Umgebungssensoreinrichtung (10) ausgebildet ist, die ermittelte, zu dem Flurförderzeug (1) gehörende Kontur (K) abzuspeichern.

5. Flurförderzeug nach einem der Ansprüche 1 bis 4, **dadurch gekennzeichnet, dass** die Umgebungssensoreinrichtung (10) ausgebildet ist, die zu dem Flurförderzeug (1) gehörende Kontur (K) zu verschiedenen Zeitpunkten zu ermitteln und bei einer Veränderung der ermittelten Kontur (K) ein Warnsignal auszugeben.

6. Flurförderzeug nach einem der Ansprüche 1 bis 5, **dadurch gekennzeichnet, dass** die Umgebungssensoreinrichtung (10) als Lasersensor oder als Kamera ausgebildet ist.

7. Verfahren zum Ermitteln der in einem Sensorüberwachungsbereich (SB) einer an einem Flurförderzeug (1) angebauten Umgebungssensoreinrichtung (10) liegenden Kontur (K) des Flurförderzeugs (1), wobei die Umgebungssensoreinrichtung (10) an einer Montagestelle (11) an dem Flurförderzeug (1) angebaut ist und einen auf einen Fahrboden (FB) ausgerichteten Sensorüberwachungsbereich (SB) aufweist, wobei von der Umgebungssensoreinrichtung (10) Objekte in dem Sensorüberwachungsbereich (SB) erfasst werden und Abstandsinformationen (AI) der erfassten Objekte ermittelt werden, **dadurch gekennzeichnet, dass** in einem Einlernvorgang von der Umgebungssensoreinrichtung (10) in dem Sensorüberwachungsbereich (SB) erfasste Objekte als zu dem Flurförderzeug (1) gehörende Kontur (K) ermittelt wird und die zu dem Flurförderzeug (1) gehörende Kontur (K) bei einer von der Umgebungssensoreinrichtung (10) ausgeführten Umgebungsüberwachung als irrelevant behandelt wird.

8. Verfahren nach Anspruch 7, **dadurch gekennzeichnet, dass** in dem Einlernvorgang mit den Abstandsinformationen (AI) der erfassten Objekte diejenigen erfassten Objekte als zu dem Flurförderzeug (1) gehörende Kontur (K) ermittelt werden, deren Abstandsinformation (AI), insbesondere deren vertikaler Abstand (AV) zu der an der Montagestelle (11) angebauten Umgebungssensoreinrichtung (10), kleiner als ein vertikaler Abstand (A) der an der Montagestelle (11) an dem Flurförderzeug (1) angebauten Umgebungssensoreinrichtung (10) zu dem Fahrboden (FB) ist.

9. Verfahren nach Anspruch 7 oder 8, **dadurch gekennzeichnet, dass** die in dem Einlernvorgang ermittelte, zu dem Flurförderzeug (1) gehörende Kontur (K) in der Umgebungssensoreinrichtung (10) abgespeichert wird.

10. Verfahren nach einem der Ansprüche 7 bis 9, **dadurch gekennzeichnet, dass** von der Umgebungssensoreinrichtung (10) die zu dem Flurförderzeug (1) gehörende Kontur (K) zu verschiedenen Zeitpunkten ermittelt wird und bei einer Veränderung der ermittelten Kontur (K) ein Warnsignal ausgegeben wird.

11. Verfahren nach einem der Ansprüche 7 bis 10, **dadurch gekennzeichnet, dass** der Einlernvorgang in einer Einlernumgebung durchgeführt wird.
